# EUROPEAN PATENT APPLICATION

(11) **EP 3 247 169 A1**
(43) Date of publication of application: **22.11.2017**
(21) Application number: 16206217.8
(22) Date of filing: 22.12.2016
(51) Int. Cl.: H04W 76/04

(54) **METHOD OF NETWORK SLICING AND RELATED APPARATUSES USING THE SAME**

(30) Priority: 17.05.2016 US 201662337345 P; 21.12.2016 US 201615387517
(71) Applicant: Industrial Technology Research Institute, Chutung, Hsinchu 31040 (TW)
(72) Inventor: SINGH, Shubhranshu, 300 Hsinchu City (TW); LAI, Chia-Lin, 701 Tainan City (TW)
(74) Representative: Becker Kurig Straus

(57) **Abstract**

The disclosure provides a method of network slicing and related apparatuses using the same. According to one of the exemplary embodiments, the disclosure provides a method of network slicing used by a user equipment, and the method would include not limited to: transmitting a network slice instance (NSI) request to request a network slice instance of a plurality of network slice instances as each of the plurality of network slice instances is linked to a unique NSI identifier (ID); receiving a NSI service reply comprising a configuration information to a first network slice instance of the plurality of network slice instances in response to transmitting the NSI request; completing a setup procedure by using the configuration information; and transmitting data by using the first network slice instance.

## Description

### TECHNICAL FIELD

The disclosure is directed to a method of network slicing and related apparatuses using the same.

### BACKGROUND

The NextGen System (NG System) refers to a Next Generation System such as the next generation (NG) radio access network (RAN), NextGen Core, and etc. The 5G communication network could be such a system. The 5G communication network has been envisioned to support a variety of services and user needs as well as being flexible enough to support future applications. In order to support a wide range of services and scenarios such as xMBB, mMTC, uMTC, and so forth with extremely different requirements, the network slice concept has been proposed as a potential approach to satisfy such diversified applications.

The NextGen System could be required to support the network slicing concept. A network slice is a composition of network functions and specific function settings and associated resources (HW /SW and network resources). These functions are combined together for a specific use case or business model. For example, a network slice could be thought of as a piece or slice of a network resource with each piece having one or more network functions and settings with required resources and capabilities to implement these functions. A network slice could be a complete logical network that is dissociated from the physical layer of the network. For example, a 5G network slice 1 could be allocated to one or more smart phones to communication with a core network through a radio access network (RAN), a 5G network slice 2 could be allocated to one or more vehicles which may drive autonomously, and a 5G network slice 3 could be allocated to one or more massive Internet of Things (IOT) devices. For the above description, it could be though that a network slice can be provision with a specific service. Within a network, a network slice instance (NSI) may refer to a particular network slice created by a network slice template (NST) so that a network slice could be thought of as a concept which describes a system behavior implemented via the network slice instance(s). Network function (NF) may refer to a processing function which has defined functional behavior and interfaces in a network.

A public land mobile network (PLMN) would typically have one or more network slices to support various services for at least one user equipment (UE) in the network as well as third parties. Incoming signaling and data from the at least one UE are transmitted by a radio access network (RAN) onto appropriate control plane (CP) and user plane (UP) functionalities of a corresponding Network Slice Instance (NSI) in the core network. These NSIs in the core network would need to be identified and differentiated among each other. In order to achieve the identification and differentiation, each core NSI is provided or configured with a specific Network Slice identifier (ID) or Network Slice Instance ID (NSI-ID) which could be used to achieve various purposes. For example, a NSI-ID could be used to correctly select or route an incoming traffic from one or more UEs to appropriate NSI(s) in a core network as the RAN may use the NSI-ID as well as the information received from the UE and the core network to select and differentiate among various configured NSIs in the core network.

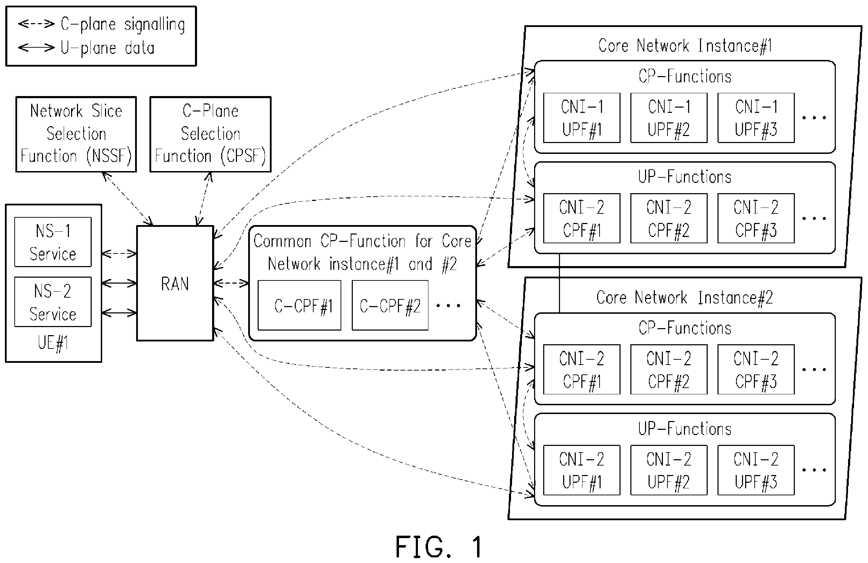

Currently, several required details are still under investigation such as a mechanism to identify a particular slice instance from the perspective of a RAN or a core network, or a UE, a mechanism to differentiate among multiple slice instances, a mechanism to select a particular network slice instance, the extent of the involvement of a RAN role, and so forth. One example of the result of such investigation is shown in FIG. 1 which illustrates sharing a set of common C-plane functions among multiples core network instances according to a version 0.4.0 of 3GPP TR 23.799. The principle of operation of FIG. 1 is recorded in version 0.4.0 of 3GPP TR 23.799 which is incorporated by reference for its terms and concepts. It should be noted that 3GPP TR 23.799 is an ongoing document and thus not all disclosures of 3GPP TR 23.799 is prior art relative to this disclosure. For instance, version 0.4.0 of 3GPP TR 23.799 does not currently contain exact details as for generating, allocating, or configuring an identifier of a network slice instance to a UE. Also 3GPP TR 23.799 lacks the exact details as for selecting or configuring the most appropriate network slice instance.

### SUMMARY

Accordingly, the disclosure is directed to a method of network slicing and related apparatuses using the same.

The disclosure is a directed to a method of network slicing used by a user equipment. The method would include not limited to: transmitting a network slice instance (NSI) request to request a network slice instance of a plurality of network slice instances as each of the plurality of network slice instances is linked to a unique NSI identifier (ID); receiving a NSI service reply which would include not limited to a configuration information to a first network slice instance of the plurality of network slice instances in response to transmitting the NSI request; completing a setup procedure by using the configuration information; and transmitting data by using the first network slice instance.

The disclosure is directed to a method of network slicing used by a base station. The method would include not limited to: receiving a network slice instance (NSI) request to request a network slice instance of a plurality of network slice instances as each of the plurality of network slice instances is linked to a unique NSI identifier (ID); transmitting a NSI service reply which would include not limited to a configuration information to a first network slice instance of the plurality of network slice instances in response to transmitting the NSI request; completing a setup procedure based on the configuration information; and receiving data from the first network slice instance.

Preferably, the disclosure is directed to a user equipment which would include a processor coupled to a transmitter and a receiver. The processor is configured at least to: transmit, via the transmitter, a network slice instance (NSI) request to request a network slice instance of a plurality of network slice instances as each of the plurality of network slice instances is linked to a unique NSI identifier (ID); receive, via the receiver, a NSI service reply which would include not limited to a configuration information to a first network slice instance of the plurality of network slice instances in response to transmitting the NSI request; complete a setup procedure by using the configuration information; and transmit data by using the first network slice instance.

The disclosure is directed to a base station which would include a processor coupled to a transmitter and a receiver. The processor is configured at least to: receive a network slice instance (NSI) request to request a network slice instance of a plurality of network slice instances as each of the plurality of network slice instances is linked to a unique NSI identifier (ID); transmit a NSI service reply which would include not limited to a configuration information to a first network slice instance of the plurality of network slice instances in response to transmitting the NSI request; complete a setup procedure based on the configuration information; and receive data from the first network slice instance.

In order to make the aforementioned features and advantages of the disclosure comprehensible, exemplary embodiments accompanied with figures are described in detail below. It is to be understood that both the foregoing general description and the following detailed description are exemplary, and are intended to provide further explanation of the disclosure as claimed.

It should be understood, however, that this summary may not contain all of the aspect and embodiments of the disclosure and is therefore not meant to be limiting or restrictive in any manner. Also the disclosure would include improvements and modifications which are obvious to one skilled in the art.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 which illustrates sharing a set of common C-plane functions among multiples core network instances according to a version 0.4.0 of 3GPP TR 23.799.
FIG. 2 illustrates entities involved to implement a method of network slicing in accordance with one of the exemplary embodiments of the disclosure.
FIG. 3 illustrates a network slicing procedure in accordance with an exemplary embodiment of the disclosure.
FIG. 4 illustrates a network slicing procedure in accordance with another exemplary embodiment of the disclosure.
FIG. 5 illustrates a network slicing procedure in accordance with another exemplary embodiment of the disclosure.
FIG. 6 illustrates a network slicing procedure in accordance with an f exemplary embodiment of the disclosure.
FIG. 7 illustrates a network slicing procedure from the perspective of a user equipment in accordance with the exemplary embodiment of FIG. 6.
FIG. 8 illustrates a network slicing procedure from the perspective of a base station in accordance with the exemplary embodiment of FIG. 6.
FIG. 9 illustrates a hardware diagram of a user equipment in terms of functional block diagram in accordance with the exemplary embodiment of FIG. 6.
FIG. 10 illustrates a hardware diagram of a base station in terms of functional block diagram in accordance with the exemplary embodiment of FIG. 6.

### DETAILED DESCRIPTION OF DISCLOSED EMBODIMENTS

Reference will now be made in detail to the present exemplary embodiments of the disclosure, examples of which are illustrated in the accompanying drawings. Wherever possible, the same reference numbers are used in the drawings and the description to refer to the same or like parts.

This disclosure aims to provide solutions that address problems related to network slicing in a next generation network such as a 5G network. The purposes of this disclosure would include not limited to (1) uniquely identifying a particular slice instance from the perspective of a RAN, a UE, and a core network, (2) providing a selecting procedure to select a particular network slice instance, (3) differentiating among multiple slice instances, and (4) defining the role of the RAN in network slice selection.

The disclosed method of network slicing would include two aspects including a procedure to generate, allocate, and/or configure a network slice instance ID to a UE. According to the disclosed method, the UE, the core network, and the RAN would have a common understanding and interpretation of the network slice instance ID. Moreover, the disclosed method of network slicing would provide a procedure for the UE to select and subsequently connect to the appropriate Network slice instance.

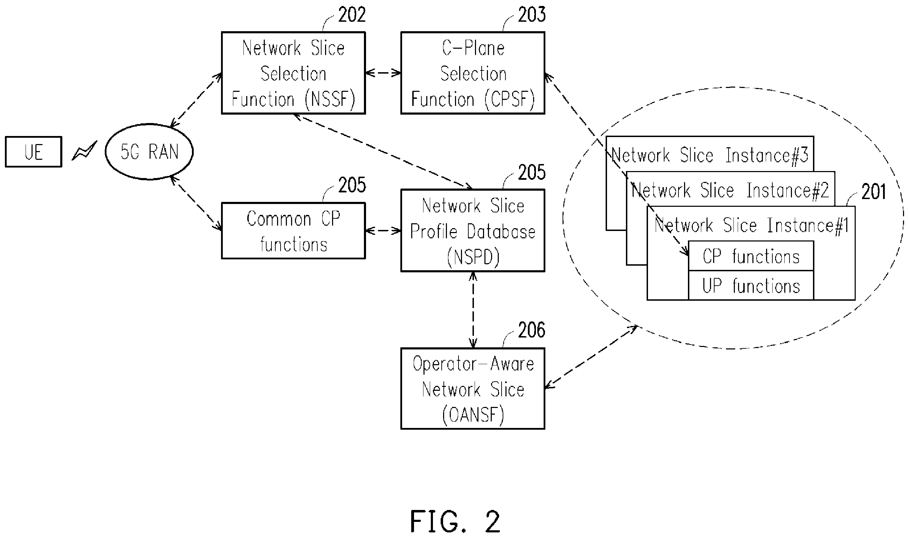

FIG. 2 illustrates entities involved to implement a method of network slicing in accordance with one of the exemplary embodiments of the disclosure. The entities involved to implement a method of network slicing to select a particular network slice instance (e.g. 201) may include not limited to a Network Slicing Selection Function (NSSF) 202, a CP / UP Selection Function (CUSF) 203, a Common CP Function 204, a Network Slice Profile Database (NSPD) 205, and an Operator Aware Network Slice Function (OANSF) 206. Each network slice instance, such as network slice instance #1 201 as in FIG. 2, contain a set of CP Functions and UP Functions. A network slice instance (e.g. 201) could be selected by the Network Slice Selection Function (NSSF) 202. The selection could be accomplished by referring to a NSI-ID as is or by mapping to another ID which is created within the RAN and mapped to the NSI-ID. When a base station receive a NSI-ID but lacks the necessary information to map the NSI-ID to a particular network slice instance, the base station may transmit the NSI-ID to the NSSF 202 which would be able to determine the relationship between the NSI-ID and its corresponding network slice instance by communicating with the NSPD 205. By selecting a network slice instance, the associated CP Functions and UP Functions could be selected by the CUSF 203. The NSPD 205 would store the information for a plurality of network slice instances and may refer to the Common CP Function 204 which contain CP functions available to the core network, and each of the plurality of network slice instances could be created or removed by the OANSF 206 and subsequently stored or deleted within the NSPD 205. The details of each functional elements of FIG. 2 could be further elucidated in the following exemplary embodiments.

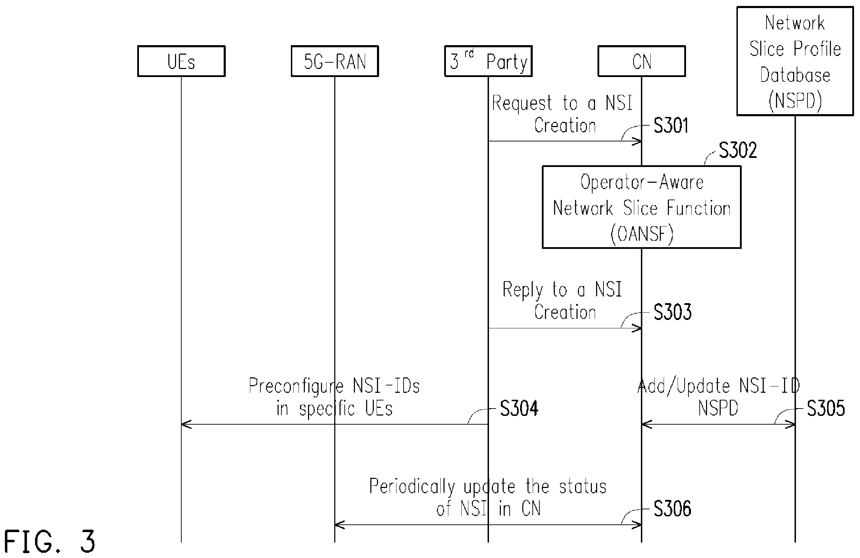

FIG. 3 illustrates a network slicing procedure in accordance with an exemplary embodiment of the disclosure. The exemplary embodiment is related to a mechanism to generate and allocate a network slice instance (NSI) identifier (ID). In general, a NSI ID is used for uniquely identifying a particular core network instance. When referring to a specific NSI-ID, the referred NSI-ID would provide sufficient information with regard to specific composition of network functions, specific settings that correspond to the network functions, and physical hardware / software network resources that associate with these specific composition of network functions for a NSI. These specific composition of network functions for a network slice instance could have been combined together to be used by a particular application as requested by a third party server or a UE. The third party server would typically be an application server that provides the particular application. The NSI-ID which could be internally associated to the operator and/or network database may also be linked or associated with a corresponding subscriber ID, a subscriber policy, and a rate of charging. This enables operator or network to charge, to authenticate, and to authorize a third party or a UE in order to use the particular network slice instance. A NSI-ID could be generated or deleted by a core network or by the RAN. Also after a NSI-ID has been created, the NSI-ID could be used directly as-is or could be subsequently linked or mapping to another ID which could be subsequently created. This ID mapping could be done by the NSSF 202 as shown in FIG. 2.

Referring to FIG. 3, in step S301, a third party application server may initiate a request to a specific network slice instance by transmitting to a core network a request for a network slice instance or a network slice instance request. Such request may result in a creation of a network slice instance if such network slice instance which corresponds to the network slice instance does not already exist. Such request may also result in the creation of a NSI ID which corresponds to the NSI associated with the network slice instance being requested if the NSI ID does not already exist. The network slice instance request of step S301 may include not limited a service type, a bandwidth, a latency, and etc. In response to receiving the network slice instance request, in step S302, the OANSF 206 of the core network may determine whether the NSI ID which corresponds to the requested network slice instance has previously existed. If the NSI ID has not previously existed, the OANSF 206 may create a new NSI ID for this network slice instance. In step S303, the core network would transmit to the third party server a reply to network slice instance request which may include a NSI ID. In step S304, the third party server may preconfigure the NSI ID in specific UEs by transmitting the NSI ID, to the specific UEs through the 5G RAN. In step S305, the core network may add or update the NSI-ID to the NSPD 205 which stores the NSI with the corresponding NSI-ID. In step S306, the 5G RAN may obtain the latest information of NSIs from the core network by exchanging information with the core network periodically. By execute step S306, as long as particular NSIsare available and able to be provided by the core network, the 5G RAN would be able to obtain the latest information of NSIs such as by receiving the a list of available NSI IDs that are currently supported by the core network. Also the 5G RAN may be able to obtain any user IDs associated with or subscribed to each of the NSI IDs.

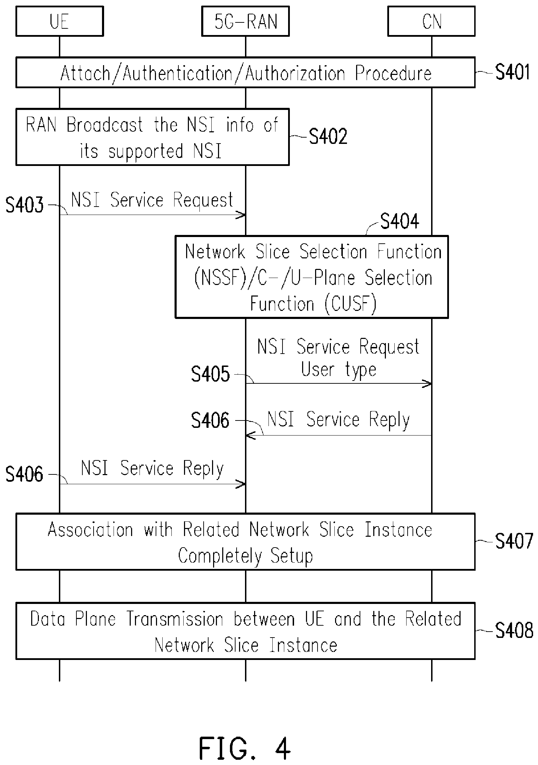

In response to the creation and allocation of NSI-ID(s), a network slice instance could be selected and utilized by referring to the NSI-ID which is associated with the network slice instance based on a procedure to be described as follows. FIG. 4 illustrates a network slicing procedure in accordance with another exemplary embodiment of the disclosure. For this exemplary embodiment, a UE, the RAN and the core network may select and be configured to the most appropriate network slice instance by using the NSI-ID along with other relevant parameters which would be pre-configured by the RAN and/or the core network during an initial attach procedure of the UE.

The exemplary embodiment of FIG. 4 could be suitable if the UE is unware of the current status of NSI in the core network. Under such circumstance, the RAN may assist the UE to determine the network slice instance by broadcasting information related to the NSI(s) that is currently available and supported by the core network. For example, the RAN may broadcast to the UE the NSI-ID(s) that are currently supported by the core network after the UE has been authenticated by the core network. When the UE receives NSI-ID(s) sent by the RAN, the UE may choose the NSI-ID linked to the network slice instance that the UE prefers and subsequently request the core network through the RAN in order to connect to this NSI.

In step S401, a UE would commence an attachment and/or authentication procedure with the core network through the 5G RAN. In step S402, in response to the attachment and/or authentication procedure being complete, the 5G RAN would make known the NSI(s) that are supported by the 5G RAN to the UE(s) that are attached to the 5G RAN by transmitting a RAN broadcast message, such as a system information (SI) message, which could be repeatedly broadcasted. The RAN broadcast message may contain information related to the NSI(s) that are supported by the 5G RAN and may also include information not limited to user type, service type, and etc. Upon receiving the information related to the NSI(s) that are supported by the core network through the 5G RAN, in step S403, the UE may select a particular NSI by transmitting to the 5G RAN a NSI service request which may include at least one of a user type, a service type, or NSI-ID corresponding to the selected NSI. If the UE has already known what network slice instance it prefers as well as the NSI-ID which corresponds to the network slice instance, the UE may transmit the NSI Request of step S403 which includes the NSI-ID. Otherwise, the UE may transmit other parameters such as at least one of a user equipment type, a service type, a latency, a bandwidth, and a quality of service (QoS) parameter. In response to receiving the NSI Request of step S403, in step S404, the 5G RAN may forward the NSI Request to the core network in step S405 to be determined by the core network or the 5G RAN may determine the NSI being selected by the UE by using the NSSF 202 and the CUSF 203 to select and map the set of CP functions and UP functions that are associated with the selected network slice instance.

Assuming that under the circumstance in which the UE transmits the NSI-ID to the 5G RAN, but the 5G RAN does not know which NSI is linked to this NSI-ID. The 5G RAN may then forward this NSI-ID to the NSSF 202. The NSSF 202 may find the appropriate NSI linked to this particular NSI-ID for the 5G RAN. Also the NSSF 202 may assist the base station to find the correspondence between any IDs which have previously been assigned to the UE and the NSI-ID. Thus, the 5G RAN would be able to setup a connection between this UE and this NSI.

According to an alternative embodiment, under the circumstance in which the UE has no pre-configured NSI-ID(s) or lacks information of the association between the NSI-ID(s) and NSI(s) of the core network, the UE information for determining the required NSI-ID such as UE type, service type, QoS parameter could also be transmitted to the core network during other UE's related procedures such as attach/authentication/authorization. Based on these information, and after checking UEs subscription policies and other relevant details, the core network may chooses one from among the available list of network slice instances. The UE may then obtain the information of NSIs such as NSI-ID from the core network during the authentication procedure instead of the NSI Service Reply in step S406. Then, the UE would be able to subsequently use the obtained NSI-ID(s) or an equivalent ID(s) in order to request the RAN to connect the related NSIs in the core network in step S403.

In step S405, the 5G RAN would transmit to the core network a UE NSI service request containing information as previously described. In response to receiving the UE NSI service request, in step S406, the core network would transmit to the UE through the 5G RAN a NSI service reply which would include a NSI-ID and related configuration information to complete the subsequent setup procedure of step S407. The NSI-ID would indicate which network slice instance the UE would gain access to. In step S407, the UE and the core network would complete the setup procedure by exchanging messages to complete the setup of the selection of the network slice instance. After the setup procedure has been completed, in step S408, the UE may use the selected NSI to initiate and perform data plane transmissions.

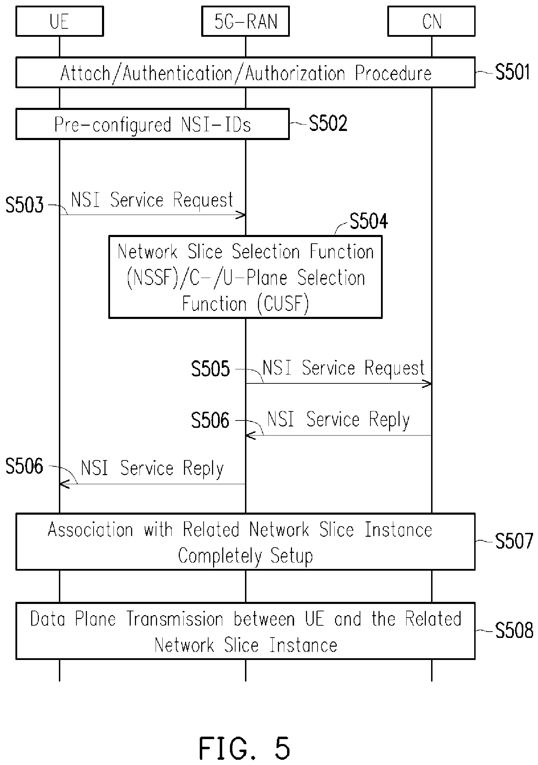

FIG. 5 illustrates a network slicing procedure in accordance with another exemplary embodiment of the disclosure. This exemplary embodiment is similar to the exemplary embodiment of FIG. 4. However, for this exemplary embodiment, a UE may select and be configured to the most appropriate network slice instance by using the NSI-ID along with other relevant parameters which have already been pre-configured to UE. Therefore, as long as the NSI-ID is preexisting in the UE, the NSI-ID does not need to be provided by the 5G RAN and/or the core network during the UE's initial attach procedure. The UE may directly request a network slice instance to gain access to by selecting and subsequently transmitting the NSI-ID to the core network through the 5G RAN.

In certain uses e.g. mIoT services, it is reasonable to pre-provision a UE with one or multiple NSI-IDs (while in other cases, NSI-IDs could be dynamically allocated by the network to the UE). Under the circumstance when this mIoT UE wants to connect to the corresponding NSI, the UE may transmit the preconfigured NSI-ID and/or a corresponding equivalent ID which corresponds to the selected NSI to RAN. According to an alternative embodiment, the transmission of the preconfigured NSI-ID and/or a corresponding equivalent ID may also occur during an attachment / authentication procedure. The RAN could then make a decision based on negotiation procedures with different entities such as policy control, charging and Network Slice Selection Function (NSSF), and accordingly enables UE to use a particular network slice instance for its user data. The procedure is further explained as follows.

In step S501, a UE would commence an attachment and/or authentication procedure with the core network through the 5G RAN. In step S502, the UE may decide to use a particular network slice instance by referring to pre-configured NSI-IDs and by selecting a NSI-ID which corresponds to the network slice instance. In step S503, the UE may transmit to the 5G RAN a NSI service request which may include the NSI-ID selected in step S502. Upon receiving the NSI-ID, if the 5G RAN does not readily have information between the received NSI-ID and the selected network slice instance, in step S504, the 5G RAN may refer to the NSSF 202 and CUSF 203 to know which network slice instance is linked to the received NSI-ID. Also, if the 5G RAN has received the equivalent ID instead of the NSI-ID, in step S504, the 5G RAN may refer to the NSSF 202 and CUSF 203 for such mapping between the received equivalent ID and the selected network slice instance. In step S505, the 5G RAN would transmit a NSI Service Request message which contains the pre-configured NSI-ID to the core network. In response to receiving the NSI service request, in step S506, the core network would transmit to the 5G RAN a NSI service reply which would include related configuration information to complete the subsequent setup procedure of step S507. In step S507, the UE and the core network would complete the setup procedure by exchanging messages to complete the setup of the selection of the network slice instance. After the setup procedure has been completed, in step S508, the UE may use the selected NSI to initiate and perform data plane transmissions.

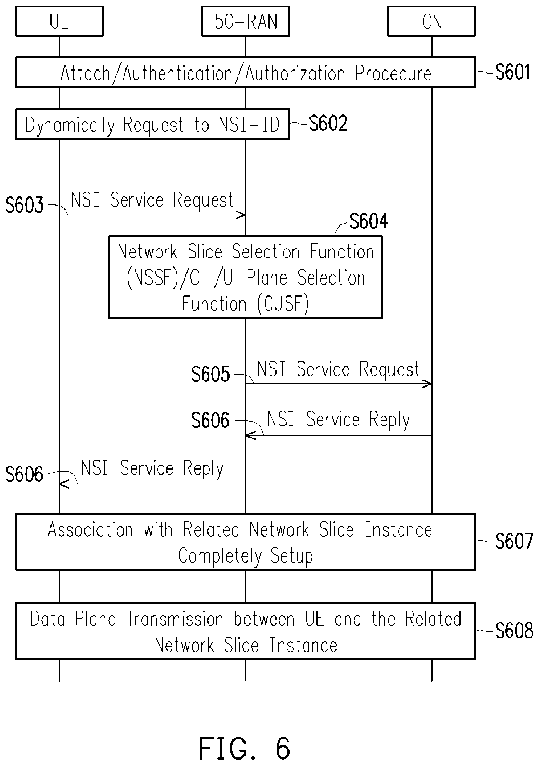

FIG. 6 illustrates a network slicing procedure in accordance with an exemplary embodiment of the disclosure. For this exemplary embodiment, a UE may make a dynamically request to one or more different NSI. In addition, a UE may also want to have services from more than one NSI from the core network. For example, a UE may connect to eMBB NSI and mIoT NSI simultaneously. Thus, the RAN may support multiple connections to NSIs between the core network and the UE. In order to achieve multiple connections, a UE may send a service request with multiple NSI-IDs to the RAN assuming that the requested NSIs by the UE are available from the core network and could be supported through the RAN. The RAN could then connect to these NSIs for this UE.

Alternatively, in certain applications such as mIoT services, it could be reasonable to pre-provision a UE with one or multiple NSI-IDs while in other cases, NSI-ID may be dynamically allocated by the network to the UE. Under the circumstance in which this mIoT UE wants to connect to the corresponding NSI, the UE may submit preconfigured NSI-ID and/or a corresponding equivalent ID to RAN such as during the attachment / authentication procedure. The RAN could then makes a decision based on negotiation procedures with different entities such as policy control, charging and Network Slice Selection Function (NSSF), and accordingly enables UE to use a particular network slice instance for its user data.

In step S601, a UE would commence an attachment and/or authentication procedure with the core network through the 5G RAN. During the attachment and/or authentication procedure, the UE may transmit parameters including at least one of a user equipment type, a service type, a latency, a bandwidth, and a quality of service (QoS) parameter. In response to receiving the parameters, the core network or the 5G RAN may determine which of the network slice instance(s)could be allocated to the UE. Alternatively, the UE may also transmit one or more pre-configured NSI-ID(s) to the 5G RAN or the core network. The RAN could then makes a decision based on negotiation procedures with different entities such as policy control, charging and Network Slice Selection Function (NSSF), and accordingly enables UE to use the particular network slice instance(s) for its user data

In step S602, in response to the attachment and/or authentication procedure being complete, the UE may dynamically make a request for one or multiple network slice instance(s). During this step, the UE may refer to preconfigured IDs, an equivalent ID, or make a request without knowing the IDs. In step S603, the UE may select one particular NSI or multiple NSIs by transmitting to the 5G RAN one or more NSI-IDs which correspond to the NSIs being requested. If the UE has already known what network slice instance it prefers as well as the NSI-ID which corresponds to the network slice instance, the UE may transmit the NSI Request of step S603 which includes the NSI-ID. Otherwise, the UE may transmit other parameters such as at least one of a user equipment type, a service type, a latency, a bandwidth, and a quality of service (QoS) parameter. The RAN could then make a decision based on negotiation procedures with different entities such as policy control, charging and Network Slice Selection Function (NSSF), and accordingly enables UE to use the particular network slice instance(s) for its user data

In response to receiving the NSI Request of step S603, in step S604, the 5G RAN may forward the NSI Request to the core network in step S605 to be decided by the core network or the 5G RAN may determine the NSI being selected by the UE by using the NSSF 202 and the CUSF 203 to select and map the set of CP functions and UP functions that are associated with the selected network slice instance. Assuming that under the circumstance in which the UE transmits the NSI-ID to the 5G RAN, but the 5G RAN does not know which NSI is linked to this NSI-ID. The 5G RAN may then forward this NSI-ID to the NSSF 202. The NSSF 202 may find the appropriate NSI linked to this particular NSI-ID for the 5G RAN. Also the NSSF 202 may assist the base station to find the correspondence between any IDs which have previously been assigned to the UE and the NSI-ID. Thus, the 5G RAN would be able to setup a connection between this UE and this NSI.

In response to receiving the UE NSI service request, in step S606, the core network would transmit to the UE through the 5G RAN a NSI service reply which would include one or more NSI-IDs and related configuration information to complete the subsequent setup procedure of step S607. The NSI-ID(s) would indicate which network slice instance(s) the UE would gain access to. In step S607, the UE and the core network would complete the setup procedure by exchanging messages to complete the setup of the selection of the network slice instance(s). After the setup procedure has been completed, in step S608, the UE may use the selected NSI to initiate and perform data plane transmissions.

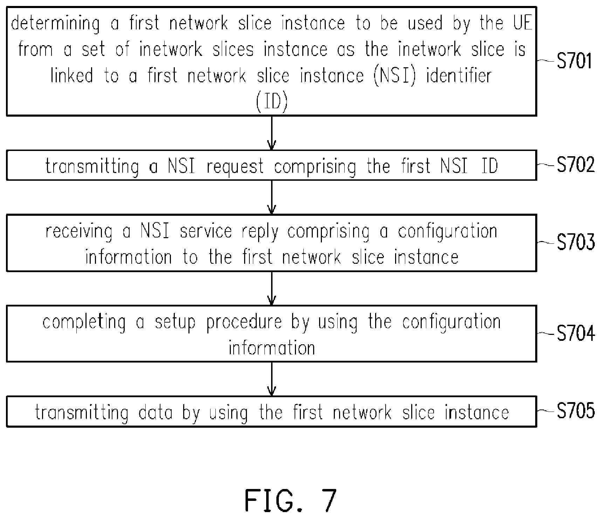

FIG. 7 illustrates a network slicing procedure from the perspective of a user equipment in accordance with the exemplary embodiment of FIG. 6. In step S701, the UE would transmit a network slice instance (NSI) request (S403, S503, S603) to request a network slice instance of a plurality of network slice instances as each of the plurality of network slice instances is linked to a unique NSI identifier (ID). In step S702, the UE would receive a NSI service reply (S406, S606) which would include not limited to a configuration information to a first network slice instance of the plurality of network slice instances in response to transmitting the NSI request. In step S703, the UE would complete a setup procedure by using the configuration information (S407, S507, S607). In step S704, the UE would transmit data by using the first network slice instance (S408, S508, S608).

According to one of the exemplary embodiments, the network slice instance (NSI) request (S602) may include at least one of a user equipment type, a service type, a latency, a bandwidth, and a quality of service (QoS) parameter. The NSI service reply (S606) may include not limited to a NSI ID which is linked to the first network slice instance. The NSI service request (S603) may repeat when the UE has determined to request for an additional network slice instance by transmitting another network slice instance (NSI) request to request another network slice instance and by subsequently receiving another NSI service reply comprising another configuration information to a second network slice instance of the plurality of network slice instances in response to transmitting the another NSI request.

According to one of the exemplary embodiments, the UE may receive a plurality of NSI IDs with each of the plurality of NSI IDs linked to one of plurality of network slice instances (S402) and subsequently determine to use the first network slice instance which is linked to a first NSI ID of the plurality of NSI IDs. The UE may then transmit the NSI request which would include not limited to the first NSI ID (S403). The NSI service request (S403) may repeat when the UE has determined to request for an additional network slice instance by determining to use a second network slice instance which is linked to a second NSI ID of the plurality of NSI IDs, transmitting another network slice instance (NSI) request to request the second network slice instance and receiving another NSI service reply which may include not limited to another configuration information to the second network slice instance of the plurality of network slice instances in response to transmitting the another NSI request.

According to one of the exemplary embodiments, the UE may determine to use the first network slice instance which is linked to a first NSI ID of a plurality of pre-configured NSI IDs which are pre-configured within the UE (S502). The network slice instance (NSI) request (S503) may further include the first NSI ID of the plurality of pre-configured NSI IDs as the first NSI ID corresponds to the first network slice instance. The NSI service request (S503) may repeat when the UE has determined to request for an additional network slice instance by determining to use a second network slice instance which is linked to a second NSI ID of a plurality of pre-configured NSI IDs which are pre-configured within the UE; transmitting another network slice instance (NSI) request to request the second network slice instance; and receiving another NSI service reply comprising another configuration information to the second network slice instance of the plurality of network slice instances in response to transmitting the another NSI request.

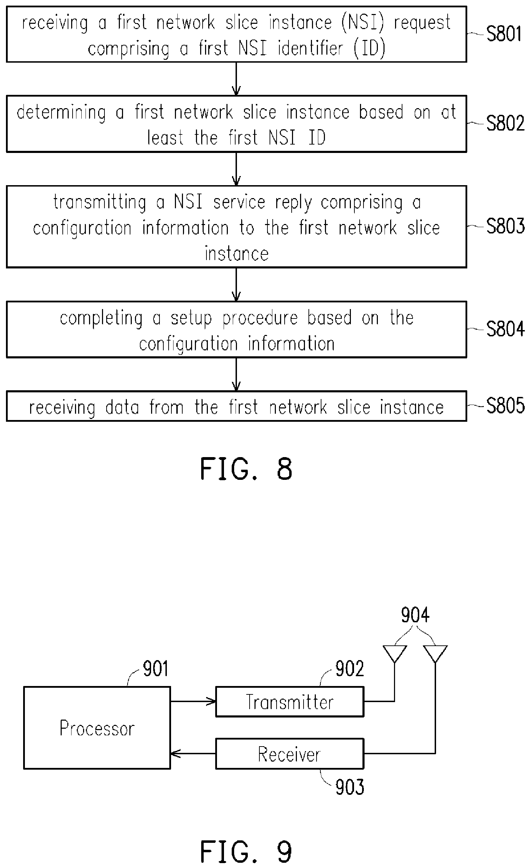

FIG. 8 illustrates a network slicing procedure from the perspective of a base station in accordance with the exemplary embodiment of FIG. 6. In step S801, the base station would receive a network slice instance (NSI) request (S403, S503, S603) to request a network slice instance of a plurality of network slice instances as each of the plurality of network slice instances is linked to a unique NSI identifier (ID). In step S802, the base station would transmit a NSI service reply (S406, S606) which may include not limited to a configuration information to a first network slice instance of the plurality of network slice instances in response to transmitting the NSI request. In step S803, the base station would complete a setup procedure based on the configuration information (S407, S507, S607). In step S804, the base station would receiving data from the first network slice instance (S408, S508, S608).

According to one of the exemplary embodiments, the network slice instance (NSI) request (S602) may include at least one of a user equipment type, a service type, a latency, a bandwidth, and a quality of service (QoS) parameter. The base station may determine the first network slice instance as an allocated network slice instance in response to forwarding the NSI request based on a negotiation procedure with another entity (S603). Alternatively, the base station may also forward the NSI request (S605) and receive the first network slice instance in a NSI service reply (S606) as an allocated network slice instance in response to forwarding the NSI request. The NSI service reply (S606) may further include a NSI ID which is linked to the first network slice instance. The base station may respond to a request for another network slice instance (NSI) by transmitting another NSI service reply which may include another configuration information to a second network slice instance of the plurality of network slice instances in response to receiving the another NSI request.

According to one of the exemplary embodiments, the base station may transmit a plurality of NSI IDs (S402) with each of the plurality of NSI IDs linked to one of plurality of network slice instances. The base station may receive a NSI service request (S403) which contains a first NSI ID of the plurality of NSI IDs in response to transmitting the plurality of NSI IDs. The base station may forward the NSI request (S405) and subsequently receive a NSI service reply (S406) which contains the first network slice instance as an allocated network slice instance in response to forwarding the NSI request. The NSI request (S403) may include the first NSI ID. The base station may receive another network slice instance (NSI) request to request a second network slice instance. The base station would then transmit another NSI service reply which includes not limited to another configuration information to the second network slice instance of the plurality of network slice instances in response to transmitting the another NSI request.

According to one of the exemplary embodiments, the base station would receive the network slice instance (NSI) request (S503) to request the first network slice instance which is linked to a first NSI ID of a plurality of pre-configured NSI IDs which are pre-configured within a UE (S502). If the first NSI ID is unknown to the base station, the base station may transmit the first NSI ID to a network slice selection function (NSSF) (S504) and subsequently receive a mapping of the first NSI ID to a known ID.

According to one of the exemplary embodiments, the base station would receive continuously updates of a plurality of NSIs which corresponds to the plurality of NSI IDs (S306).

FIG. 9 illustrates a hardware diagram of a user equipment in terms of functional block diagram in accordance with the exemplary embodiment of FIG. 6. The term "user equipment" (UE) in this disclosure may be, for example, a mobile station, an advanced mobile station (AMS), a server, a client, a desktop computer, a laptop computer, a network computer, a workstation, a personal digital assistant (PDA), a tablet personal computer (PC), a scanner, a telephone device, a pager, a camera, a television, a hand-held video game device, a musical device, a wireless sensor, and the like. In some applications, a UE may be a fixed computer device operating in a moving environment, such as a bus, a train, an airplane, a boat, a car, and so forth. The user equipment may include not limited to a processor 901 coupled to a transmitter 902, a receiver 903, and an antenna array 904.

The transmitter 902 and receiver 903 could be configured to operate in the radio frequency or millimeter wave (mmWave) frequency and may also perform operations such as low noise amplifying, impedance matching, frequency mixing, up or down frequency conversion, filtering, amplifying, and so forth. The transmitter 902 and receiver 903 may each include one or more analog-to-digital (A/D) and digital-to-analog (D/A) converters which are configured to convert from a digital signal format to an analog signal format during uplink signal processing and from an analog signal format to digital signal format during downlink signal processing. The antenna array 904 includes multiple antennas which would transmit and receive omni-directional beams or directional antenna beams.

The processor 901 is configured to process digital signals and to perform procedures of the proposed method of network slicing in accordance with the proposed exemplary embodiments of the disclosure. Also, the processor 901 may access to a non-transitory storage medium which stores programming codes, codebook configurations, buffered data, or record configurations assigned by the processor 901. The processor 901 could be implemented by using programmable units such as a micro-processor, a micro-controller, a DSP chips, FPGA, etc. The functions of the processor(s) may also be implemented with separate electronic devices or ICs. It should be noted that the functions of processor 901 may be implemented with either hardware or software.

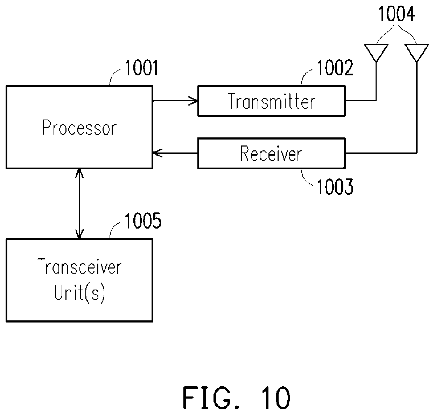

FIG. 10 illustrates a hardware diagram of a base station in terms of functional block diagram in accordance with a fourth exemplary embodiments of the disclosure. The term base station (BS) in this disclosure could be synonymous, for example, with a variation or a sub-variation of an "eNodeB" (eNB), a Node-B, an advanced base station (ABS), a base transceiver system (BTS), an access point, a home base station, a relay station, a scatterer, a repeater, an intermediate node, an intermediary, satellite-based communication base stations, and so forth. The proposed base station may include not limited to a processor 1001 coupled to a transmitter 1002, a receiver 1003, an antenna array1004, and transceiver unit(s) 1005.

The transmitter 1002 and receiver 1003 could be configured to transmit and receive signals respectively in the radio frequency or in the mmWave frequency. The transmitter 1002 and receiver 1003 may also perform operations such as low noise amplifying, impedance matching, frequency mixing, up or down frequency conversion, filtering, amplifying, and so forth. The transmitter 1002 and receiver 1003 may each include one or more analog-to-digital (A/D) and digital-to-analog (D/A) converters which are configured to convert from an analog signal format to a digital signal format during uplink signal processing and from a digital signal format to an analog signal format during downlink signal processing. The antenna array 1004 may include multiple antennas which would transmit and receive omni-directional antenna beams or directional antenna beams.

The processing unit 1001 is configured to process digital signals and to perform procedures of the proposed method of network slicing in accordance with the proposed exemplary embodiments of the disclosure. Also, the processing unit 1001 may access to a non-transitory storage medium which stores programming codes, codebook configurations, buffered data, or record configurations assigned by the processing unit 2801. The processing unit 1001 could be implemented by using programmable units such as a micro-processor, a micro-controller, a DSP chips, FPGA, etc. The functions of the processing unit 1001 may also be implemented with separate electronic devices or ICs. It should be noted that the functions of processing unit 1001 may be implemented with either hardware or software.

In view of the aforementioned descriptions, the present disclosure is suitable for being used in a wireless communication system and is able to uniquely identifying a particular slice instance from the perspective of a RAN, a UE, and a core network, providing a selecting procedure to select a particular network slice instance, differentiating among multiple slice instances, and defining the role of the RAN in network slice selection. However, it should be noted that it should be apparent to an ordinary person skilled in the art that the disclosure could be implemented without necessarily achieving all the above stated purposes of the disclosure.

No element, act, or instruction used in the detailed description of disclosed embodiments of the present application should be construed as absolutely critical or essential to the present disclosure unless explicitly described as such. Also, as used herein, each of the indefinite articles "a" and "an" could include more than one item. If only one item is intended, the terms "a single" or similar languages would be used. Furthermore, the terms "any of" followed by a listing of a plurality of items and/or a plurality of categories of items, as used herein, are intended to include "any of", "any combination of", "any multiple of", and/or "any combination of multiples of the items and/or the categories of items, individually or in conjunction with other items and/or other categories of items. Further, as used herein, the term "set" is intended to include any number of items, including zero. Further, as used herein, the term "number" is intended to include any number, including zero.

## Claims

1. A method of network slicing used by a user equipment, named UE hereinafter, **characterized by** comprising:
transmitting a network slice instance, named NSI hereinafter, request (S403, S503, S603) to request a network slice instance of a plurality of network slice instances as each of the plurality of network slice instances is linked to a unique NSI identifier, named ID hereinafter;
receiving a NSI service reply (S406, S606) comprising a configuration information to a first network slice instance of the plurality of network slice instances in response to transmitting the NSI request;
completing a setup procedure by using the configuration information (S407, S507, S607); and
transmitting data by using the first network slice instance (S408, S508, S608).

2. The method of claim 1, **characterized in that** the NSI request (S602) comprising at least one of a user equipment type, a service type, a latency, a bandwidth, and a quality of service, named QoS hereinafter, parameter.

3. The method of claim 2, **characterized in that** the NSI service reply (S606) further comprising a NSI ID which is linked to the first network slice instance.

4. The method of claim 1, **characterized in that** further comprising:
transmitting another NSI request to request another network slice instance; and
receiving another NSI service reply comprising another configuration information to a second network slice instance of the plurality of network slice instances in response to transmitting the another NSI request.

5. The method of claim 1, **characterized in that** further comprising:
receiving a plurality of NSI IDs with each of the plurality of NSI IDs linked to one of plurality of network slice instances (S402); and
determining to use the first network slice instance which is linked to a first NSI ID of the plurality of NSI IDs.

6. The method of claim 5, **characterized in that** transmitting the NSI request comprises:
transmitting the NSI request which comprises the first NSI ID (S403).

7. The method of claim 5, **characterized in that** further comprising:
determining to use a second network slice instance which is linked to a second NSI ID of the plurality of NSI IDs;
transmitting another NSI request to request the second network slice instance; and
receiving another NSI service reply comprising another configuration information to the second network slice instance of the plurality of network slice instances in response to transmitting the another NSI request.

8. The method of claim 1, **characterized in that** further comprising:
determining to use the first network slice instance which is linked to a first NSI ID of a plurality of pre-configured NSI IDs which are pre-configured within the UE (S502).

9. The method of claim 8, **characterized in that** the NSI request (S503) further comprising the first NSI ID of the plurality of pre-configured NSI IDs as the first NSI ID corresponds to the first network slice instance.

10. The method of claim 8, **characterized in that** further comprising:
determining to use a second network slice instance which is linked to a second NSI ID of a plurality of pre-configured NSI IDs which are pre-configured within the UE;
transmitting another NSI request to request the second network slice instance; and
receiving another NSI service reply comprising another configuration information to the second network slice instance of the plurality of network slice instances in response to transmitting the another NSI request.

11. A method of network slicing used by a base station, **characterized by** comprising:
receiving a network slice instance, named NSI hereinafter, request (S403, S503, S603) to request a network slice instance of a plurality of network slice instances as each of the plurality of network slice instances is linked to a unique NSI identifier, named ID hereinafter;
transmitting a NSI service reply (S406, S606) comprising a configuration information to a first network slice instance of the plurality of network slice instances in response to transmitting the NSI request;
completing a setup procedure based on the configuration information (S407, S507, S607); and
receiving data from the first network slice instance (S408, S508, S608).

12. The method of claim 11, **characterized in that** the NSI request (S602) comprising at least one of a user equipment type, a service type, a latency, a bandwidth, and a quality of service, named QoS hereinafter, parameter, and claim 11 further comprising:
determining the first network slice instance as an allocated network slice instance in response to forwarding the NSI request based on a negotiation procedure with another entity (S603).

13. The method of claim 12, **characterized in that** the NSI service reply (S606) further comprising a NSI ID which is linked to the first network slice instance.

14. The method of claim 11, **characterized in that** further comprising:
receiving another NSI request to request another network slice instance; and
transmitting another NSI service reply comprising another configuration information to a second network slice instance of the plurality of network slice instances in response to receiving the another NSI request.

15. The method of claim 11, **characterized in that** further comprising:
transmitting a plurality of NSI IDs (S402) with each of the plurality of NSI IDs linked to one of plurality of network slice instances;
receiving a first NSI ID of the plurality of NSI IDs in response to transmitting the plurality of NSI IDs;
forwarding the NSI request (S405); and
receiving the first network slice instance as an allocated network slice instance in response to forwarding the NSI request.

16. The method of claim 15, **characterized in that** the NSI request (S403) which comprises the first NSI ID.

17. The method of claim 15, **characterized in that** further comprising:
receiving another NSI request to request a second network slice instance; and
transmitting another NSI service reply comprising another configuration information to the second network slice instance of the plurality of network slice instances in response to transmitting the another NSI request.

18. The method of claim 15, **characterized in that** further comprising:
transmitting the first NSI ID to a network slice selection function, named NSSF hereinafter, (S504); and
receiving a mapping of the first NSI ID to a known ID.

19. The method of claim 18, **characterized in that** further comprising:
receiving continuously updates of a plurality of NSIs which corresponds to the plurality of NSI IDs (S306).

20. The method of claim 11, **characterized in that** receiving the request (S403, S503, S603) to request the network slice instance of the plurality of network slice instances further comprising:
receiving the NSI request (S503) to request the first network slice instance which is linked to a first NSI ID of a plurality of pre-configured NSI IDs which are pre-configured within a UE (S502).

21. A user equipment comprising:
a transmitter (902);
a receiver (903); and
a processor (901) coupled to the transmitter (902) and the receiver (903) and **characterized in that** the processor (901) is configured at least to:
transmit, via the transmitter (902), a network slice instance, named NSI hereinafter, request (S403, S503, S603) to request a network slice instance of a plurality of network slice instances as each of the plurality of network slice instances is linked to a unique NSI identifier, named ID hereinafter;
receive, via the receiver (903), a NSI service reply (S406, S606) comprising a configuration information to a first network slice instance of the plurality of network slice instances in response to transmitting the NSI request;
complete a setup procedure by using the configuration information (S407, S507, S607); and
transmit data by using the first network slice instance (S408, S508, S608).

22. A base station comprising:
a transmitter (1002);
a receiver (1003); and
a processor (1001) coupled to the transmitter (1002) and the receiver (1003) and **characterized in that** the processor (1001) is configured at least to:
receive a network slice instance, named NSI hereinafter, request (S403, S503, S603) to request a network slice instance of a plurality of network slice instances as each of the plurality of network slice instances is linked to a unique NSI identifier, named ID hereinafter;
transmit a NSI service reply (S406, S606) comprising a configuration information to a first network slice instance of the plurality of network slice instances in response to transmitting the NSI request;
complete a setup procedure based on the configuration information (S407, S507, S607); and
receive data from the first network slice instance (S408, S508, S608).
